# FASCICULE DE BREVET EUROPEEN

(11) **EP 3 873 683 B1**
(45) Date de publication et mention de la délivrance du brevet: **25.01.2023**
(21) Numéro de dépôt: 19839375.3
(22) Date de dépôt: 10.12.2019
(51) Int. Cl.: B09B 3/00, C04B 28/34, G21F 9/16

(54) **PROCÉDÉ DE CONDITIONNEMENT PAR CIMENTATION D'UN DÉCHET ACIDE**
VERFAHREN ZUR KONDITIONIERUNG EINES SAUREN ABFALLS DURCH ZEMENTIEREN
METHOD FOR CONDITIONING AN ACID WASTE BY CEMENTATION

(30) Priorité: 18.12.2018 FR 1873254
(43) Date de publication de la demande: 08.09.2021
(73) Titulaire: Orano Demantelement, 92320 Chatillon (FR); Universite Gustave Eiffel, 77454 Marne-la-Vallée Cedex 2 (FR)
(72) Inventeur: STEFAN, Lavinia, 78100 SAINT GERMAIN EN LAYE (FR); CHAUSSADENT, Thierry, 75013 PARIS (FR); LE ROUZIC, Mathieu, 94500 CHAMPIGNY-SUR-MARNE (FR)
(74) Mandataire: Brevalex
(86) Numéro de dépôt international: PCT/FR2019/053005
(87) Numéro de publication internationale: WO 2020/128229

(56) Documents cités:
- EP-A1- 3 242 298
- WO-A1-2014/140018
- WO-A2-2004/075207
- FR-A1- 2 545 387
- FR-A1- 2 799 876

## Description

### DOMAINE TECHNIQUE

L'invention se rapporte au domaine du conditionnement de déchets par cimentation, c'est-à-dire par incorporation dans une matrice cimentaire.

Plus spécifiquement, elle se rapporte à un procédé de conditionnement par cimentation d'un déchet acide, ce déchet pouvant être un déchet liquide tel qu'un effluent aqueux, un déchet semi-liquide tel qu'une boue, ou un déchet solide tel que des gravats, ou un mélange de ceux-ci.

L'invention trouve notamment application dans le conditionnement de déchets acides produits par l'industrie nucléaire et, donc, contaminés ou potentiellement contaminés par des radioéléments, tels que :
- les déchets acides issus de procédés mis en oeuvre dans le cycle du combustible nucléaire et, notamment, pour l'extraction minière de l'uranium, sa conversion et son enrichissement, la fabrication des combustibles nucléaires neufs et le traitement des combustibles nucléaires usés ;
- les déchets acides issus d'opérations de décontamination d'équipements et installations du cycle nucléaire ou de réacteurs nucléaires ;
- les déchets acides issus d'opérations d'assainissement-démantèlement d'installations nucléaires ; et
- leurs mélanges.

Toutefois, il va de soi qu'elle est susceptible d'être mise à profit pour conditionner tout autre type de déchets acides quelle que soit leur origine (déchets acides issus de l'industrie chimique, de l'industrie agroalimentaire, de laboratoires d'essais, etc.).

### ÉTAT DE LA TECHNIQUE ANTÉRIEURE

Le conditionnement par cimentation de déchets dangereux et, notamment, de déchets nucléaires est un mode de conditionnement qui présente de nombreux atouts dont sa simplicité de mise en oeuvre et son coût relativement faible (si on le compare aux coûts d'autres modes de conditionnement).

La cimentation d'un déchet implique le mélange de ce déchet avec un matériau cimentaire.

Les matériaux cimentaires à base de ciments hydrauliques tels que les ciments Portland, ou à base de laitiers de haut-fourneau, qui sont classiquement utilisés pour cimenter des déchets, sont des matériaux fortement basiques.

Mélanger directement un déchet acide avec ce type de matériau est difficile, voire impossible, à réaliser en raison de l'échauffement généré par la réaction acide-base, échauffement qui est d'autant plus important que l'acidité du déchet est plus élevée.

C'est la raison pour laquelle l'état de la technique préconise de neutraliser préalablement l'acidité du déchet en le mélangeant avec de l'hydroxyde de sodium (NaOH) et/ou de l'hydroxyde de calcium (Ca(OH)₂) de manière à éviter ou, à tout le moins, limiter l'échauffement généré par la réaction acide-base (cf., par exemple, C. Utton et I. H. Godfrey, Rapport du National Nuclear Laboratory NNL (09) 10212, 29 janvier 2010, ci-après référence **[1]**).

Toutefois, cette neutralisation présente un certain nombre d'inconvénients qui sont d'autant plus importants que l'acidité du déchet est élevée, tels que :
- le mélange du déchet acide avec l'agent neutralisant produit lui-même un échauffement qu'il convient de maîtriser ;
- la neutralisation de l'acidité du déchet alourdit la mise en oeuvre du procédé de cimentation du déchet, notamment si le mélange du déchet acide avec l'agent neutralisant doit être réalisé lentement pour limiter l'échauffement produit par ce mélange ;
- la neutralisation de l'acidité du déchet génère une augmentation du volume du déchet à cimenter du fait de l'apport de l'agent neutralisant ; et
- la présence d'un agent neutralisant dans le matériau cimentaire peut avoir un impact négatif sur le comportement de ce matériau ; ainsi, il a été montré que la présence de NaOH rend la cinétique d'hydratation du matériau cimentaire plus rapide, la chaleur de réaction du matériau cimentaire plus importante et augmente son retrait, tandis que la présence de Ca(OH)₂ conduit à une baisse de ses performances mécaniques.

Il a, par ailleurs, été proposé dans la demande internationale PCT WO 2004/075207, ci-après référence **[2]**, un procédé de conditionnement de déchets nucléaires et, notamment, de déchets acides contaminés par des actinides et/ou des transuraniens par cimentation dans une matrice à base d'un ciment phosphomagnésien qui a été développé par l'Argonne National Laboratory sous le nom Ceramicrete^{™}.

Dans ce procédé aussi, il est prévu de traiter préalablement les déchets acides en les mélangeant avec de l'oxyde de magnésium (MgO), qui est l'un des deux composants du Ceramicrete^{™}, pour amener leur pH à une valeur au moins égale à 5, et de procéder secondairement au mélange des déchets avec les composants du matériau cimentaire.

Là également, ce traitement préalable visant à neutraliser l'acidité des déchets est consommateur de temps et d'énergie car les déchets acides doivent être mélangés lentement avec l'oxyde de magnésium pour éviter que le mélange résultant n'ait une température trop élevée. Ainsi, par exemple, il est rapporté, dans l'exemple 3 de la référence **[2]**, que rien que pour neutraliser 195 g d'acide chlorhydrique concentré avec 110,4 g d'oxyde de magnésium - ce qui correspond à des quantités sans commune mesure avec celles susceptibles d'être mises en jeu dans une cimentation de déchets à une échelle industrielle - 40 minutes sont nécessaires.

Compte-tenu de ce qui précède, les Inventeurs se sont fixé pour but de fournir un procédé qui permette de conditionner des déchets acides et, plus spécifiquement, des déchets de forte à très forte acidité dans une matrice cimentaire mais qui soit exempt de toute étape préalable de neutralisation de l'acidité de ces déchets, et ce, sans que l'absence d'une telle neutralisation ait un impact négatif notable et/ou non maîtrisé sur la prise du matériau cimentaire, la chaleur de réaction de ce matériau et sur les performances mécaniques du composite ciment/déchets obtenu.

Ils se sont également fixé pour but que ce procédé soit applicable à la fabrication de colis de conditionnement de déchets acides, autorisant un taux d'incorporation élevé de déchets dans une matrice cimentaire de sorte à minimiser, pour un volume de déchets donné, le nombre de colis de conditionnement.

Or, dans le cadre de leurs travaux, les Inventeurs ont constaté qu'à rebours de l'enseignement de la référence **[2]**, il est possible d'incorporer des déchets fortement à très fortement acides, tels que de l'acide nitrique ou sulfurique concentré ou des boues à haute teneur en acide fluorhydrique, dans un matériau cimentaire à base d'un ciment phosphomagnésien, et ce, directement, c'est-à-dire sans étape préalable de neutralisation de l'acidité de ces déchets, et sans que la prise du matériau cimentaire, la chaleur de réaction de ce matériau et les performances mécaniques du composite ciment/déchets soient impactées de façon négative et/ou non maîtrisée. FR2545387A1 divulgue un procédé de solidification de déchets liquides de diverses origines telles que industrielles, agricoles ou municipales. FR2799876A1 divulgue un procédé de conditionnement de déchets métalliques non ferreux. WO2014/140018A1 divulgue un procédé d'immobilisation de déchets contenant de l'aluminium métallique. EP3242298A1 divulgue un procédé de traitement de déchets radioactifs liquides.

Et c'est sur ces constatations expérimentales qu'est basée l'invention.

### EXPOSÉ DE L'INVENTION

L'invention a donc, en premier lieu, pour objet un procédé de conditionnement par cimentation d'un déchet acide, le déchet acide étant choisi parmi les liquides de pH au plus égal à 4, les semi-liquides de pH au plus égal à 4, les solides dont la dissolution partielle ou totale dans de l'eau conduit à une solution ou une suspension de pH au plus égal à 4, et les mélanges de ceux-ci, qui comprend les étapes de :
a) préparation d'une pâte cimentaire ayant au moins comme composants : un ciment phosphomagnésien et le déchet acide, et
b) durcissement de la pâte cimentaire ainsi obtenue,
et qui est caractérisé en ce qu'à l'étape a), la pâte cimentaire est préparée sans que le déchet acide ait été préalablement soumis à un traitement consistant à abaisser son acidité.

Dans le cadre de l'invention, on entend par « ciment phosphomagnésien », tout ciment composé d'une source de magnésium oxydé, c'est-à-dire à l'état d'oxydation +II, cette source étant typiquement un oxyde de magnésium (MgO) calciné à haute température (de type « hard burnt » ou « dead burnt »), pur ou présentant des impuretés du type SiO₂, CaO, Fe₂O₃, AlO₃, etc, et une source de phosphate soluble dans l'eau, cette source étant typiquement un sel d'acide phosphorique.

On rappelle que ce type de ciment, que l'on prépare typiquement en gâchant la source de magnésium oxydé (qui se présente sous la forme d'une poudre) par une solution aqueuse comprenant le phosphate soluble dans l'eau, conduit à la formation d'un matériau cimentaire par réaction entre la source de magnésium oxydé (qui est basique) et la source de phosphate soluble dans l'eau (qui est acide), lesquelles sources de magnésium oxydé et de phosphate soluble dans l'eau réagissent ensemble à température ambiante pour former une pâte cimentaire qui fait prise rapidement.

Parmi les ciments phosphomagnésiens, on préfère les ciments composés :
- d'un oxyde de magnésium tel que ceux qui sont commercialisés par la société RICHARD BAKER HARRISON sous les références DBM 90 et DBM 95, et
- d'un sel d'acide phosphorique et d'un métal tel que le phosphate d'aluminium (AlPO₄), l'hydrogénophosphate d'aluminium (Al₂(HPO₄)₃), le dihydrogéno-phosphate d'aluminium (Al(H₂PO₄)₃), le phosphate de sodium (Na₃PO₄), l'hydrogéno-phosphate de sodium (Na₂HPO₄), le dihydrogénophosphate de sodium (NaH₂PO₄), le phosphate de potassium (K₃PO₄), l'hydrogénophosphate de potassium (K₂HPO₄) ou, le dihydrogénophosphate de potassium (KH₂PO₄), ou d'un sel d'acide phosphorique et d'un non-métal tel que le phosphate d'ammonium ((NH₄)₃PO₄), l'hydrogénophosphate de diammonium ((NH₄)₂HPO₄), le dihydrogénophosphate d'ammonium (NH₄H₂PO₄) ou le polyphosphate d'ammonium ((NH₄)₃HP₂O₇),
et ce, avec un rapport molaire Mg/P (magnésium/phosphore) qui est préférentiellement compris entre 1 et 12 et, mieux encore, entre 5 et 10.

Parmi ces sels d'acide phosphorique, préférence est donnée au dihydrogéno-phosphate de potassium.

Outre de comprendre le ciment phosphomagnésien et le déchet, la pâte cimentaire peut comprendre au moins un adjuvant choisi parmi les plastifiants (réducteurs d'eau ou non), les superplastifiants, les retardateurs de prise et les composés qui combinent plusieurs effets tels que les superplastifiants/retardateurs de prise, en fonction des propriétés d'ouvrabilité, de prise et/ou de durcissement que l'on souhaite conférer à la pâte cimentaire.

En particulier, la composition peut comprendre un superplastifiant et/ou un retardateur de prise.

Des superplastifiants susceptibles de convenir sont notamment les superplastifiants hauts réducteurs d'eau du type polynaphtalène sulfonates.

Des retardateurs de prise susceptibles de convenir sont notamment l'acide fluorhydrique (HF) et ses sels (fluorure de sodium par exemple), l'acide phosphorique (H₃PO₄) et ses sels (phosphate de sodium par exemple), l'acide borique (H₃BO₃) et ses sels (borate de sodium du type borax par exemple), l'acide citrique et ses sels (citrate de sodium par exemple), l'acide malique et ses sels (malate de sodium par exemple), l'acide tartrique et ses sels (tartrate de sodium par exemple), le carbonate de sodium (Na₂CO₃) et le gluconate de sodium.

Parmi ceux-ci, préférence est donnée à l'acide fluorhydrique, au fluorure de sodium, à l'acide borique et au borate de sodium.

Lorsque la pâte cimentaire comprend un superplastifiant, celui-ci ne représente, de préférence, pas plus de 4,5 % en masse de la masse totale de cette pâte cimentaire tandis que, lorsque la pâte cimentaire comprend un retardateur de prise, celui-ci ne représente, de préférence, pas plus de 10 % en masse de la masse totale de ladite pâte cimentaire.

Conformément à l'invention, la pâte cimentaire peut comprendre de plus :
- du sable, par exemple du type de celui commercialisé par la société SIBELCO sous la référence CV32, auquel cas la pâte cimentaire prend alors le nom de mortier et le rapport massique sable/ciment peut atteindre 6 ; et/ou
- des gravillons, auquel cas la pâte cimentaire prend alors le nom de béton et le rapport massique gravillons/ciment peut aller jusqu'à 4.

Les termes « sable » et « gravillon » doivent être pris dans leur acceptation usuelle dans le domaine des mortiers et bétons (cf. notamment la norme NF EN 12620 relative aux granulats pour béton), à savoir que :
- un sable est un granulat dont la dimension supérieure D est au plus égale à 4 mm ; tandis que
- un gravillon est un granulat dont la dimension inférieure d est au moins égale à 2 mm et dont la dimension supérieure *D* est au moins égale à 4 mm, étant entendu que, dans le cadre de la présente invention, la dimension supérieure D du (des) gravillon(s) est, de préférence, au plus égale à 16 mm.

Conformément à l'invention, la pâte cimentaire comprend typiquement un rapport massique eau/ciment phosphomagnésien allant de 0,10 à 1 et, de préférence, de 0,20 à 0,60 et, mieux encore, de 0,30 à 0,55.

L'eau présente dans la pâte cimentaire peut provenir en tout ou partie du déchet acide si ce dernier est un déchet liquide, semi-liquide ou un déchet solide que l'on aura préalablement humidifié. Aussi, la quantité d'eau de gâchage, qui est susceptible d'être ajoutée au ciment phosphomagnésien et au déchet acide lors de la préparation de la pâte cimentaire, est-elle, de préférence, ajustée en tenant compte de la teneur en eau du déchet acide.

La préparation de la pâte cimentaire, ou étape a), peut être réalisée de différentes manières, notamment en fonction de la forme sous laquelle se présente le déchet acide : liquide, semi-liquide ou solide et, dans le cas d'un déchet solide, sèche ou humidifiée.

Ainsi, par exemple, dans un premier mode de mise en oeuvre du procédé, l'étape
a) comprend les sous étapes de :
   i) introduction du ciment phosphomagnésien et d'eau dans un conteneur et malaxage du ciment et de l'eau jusqu'à obtention d'un mélange homogène ;
   ii) introduction du déchet acide sous forme sèche, humidifiée, semi-liquide ou liquide dans le conteneur ; et simultanément ou successivement
   iii) malaxage du mélange obtenu à la sous-étape i) et du déchet acide jusqu'à homogénéisation, moyennant quoi on obtient la pâte cimentaire.

Il est à noter que la source de phosphate soluble dans l'eau, que comprend le ciment phosphomagnésien, et l'eau peuvent être introduites dans le conteneur séparément ou sous la forme d'une solution préalablement préparée par dissolution de la source de phosphate dans cette eau.

Si un ou des adjuvants et/ou du sable et/ou des gravillons sont prévus, alors ils peuvent être introduits dans le conteneur en même temps que le ciment phosphomagnésien et l'eau et être malaxés avec le ciment et l'eau à la sous-étape i).

Dans un deuxième mode de mise en oeuvre du procédé, l'étape a) comprend les sous-étapes de :
i) introduction du déchet acide sous forme sèche dans un conteneur et malaxage du déchet jusqu'à homogénéisation ;
ii) introduction d'eau et du ciment phosphomagnésien dans le conteneur; et simultanément ou successivement
iii) malaxage du déchet acide, de l'eau et du ciment phosphomagnésien jusqu'à homogénéisation, moyennant quoi on obtient la pâte cimentaire.

Là également, la source de phosphate soluble dans l'eau, que comprend le ciment phosphomagnésien, et l'eau peuvent être introduites dans le conteneur séparément ou sous la forme d'une solution préalablement préparée par dissolution de la source de phosphate dans cette eau.

Si un ou des adjuvants et/ou du sable et/ou des gravillons sont prévus, alors ils peuvent être introduits dans le conteneur en même temps que l'eau et le ciment phosphomagnésien et être malaxés avec le déchet acide, l'eau et le ciment à la sous-étape iii).

Dans un troisième mode de mise en oeuvre du procédé, l'étape a) comprend les sous-étapes de :
i) introduction du déchet acide sous forme humidifiée, semi-liquide ou liquide dans un conteneur et son malaxage jusqu'à homogénéisation ;
ii) introduction du ciment phosphomagnésien dans le conteneur et malaxage du ciment et du déchet acide jusqu'à obtention d'un mélange homogène ;
iii) introduction éventuelle d'eau dans le conteneur (si la totalité de l'eau nécessaire au gâchage du ciment phosphomagnésien n'est pas contenue dans le déchet acide) et, simultanément ou successivement, malaxage du mélange obtenu à la sous-étape ii) et de l'eau jusqu'à homogénéisation, moyennant quoi on obtient la pâte cimentaire.

Si un ou des adjuvants et/ou du sable et/ou des gravillons sont prévus, alors ils peuvent être introduits dans le conteneur en même temps que le ciment phosphomagnésien et être malaxés avec le ciment et le déchet acide à la sous-étape ii).

Dans un quatrième mode de mise en oeuvre du procédé, l'étape a) comprend les sous-étapes de :
i) introduction du déchet acide sous forme humidifiée, semi-liquide ou liquide dans un conteneur et malaxage du déchet jusqu'à homogénéisation ;
ii) introduction du sable et/ou des gravillons dans le conteneur et malaxage du déchet avec le sable et/ou les gravillons jusqu'à obtention d'un mélange homogène ;
iii) introduction d'eau et du ciment phosphomagnésien dans le conteneur; et simultanément ou successivement
iv) malaxage du mélange obtenu à la sous-étape ii), de l'eau et du ciment phosphomagnésien jusqu'à homogénéisation, moyennant quoi on obtient la pâte cimentaire.

Là aussi, la source de phosphate soluble dans l'eau, que comprend le ciment phosphomagnésien, et l'eau peuvent être introduites dans le conteneur séparément ou sous la forme d'une solution préalablement préparée par dissolution de la source de phosphate dans cette eau.

Si un ou des adjuvants sont prévus, alors ils peuvent être introduits dans le conteneur en même temps que l'eau et le ciment phosphomagnésien et être malaxés, à la sous-étape iv), avec le mélange obtenu à la sous-étape ii), l'eau et le ciment.

Dans un cinquième mode de mise en oeuvre du procédé, l'étape a) comprend les sous-étapes de :
i) introduction du ciment phosphomagnésien dans un premier conteneur et malaxage du ciment jusqu'à homogénéisation ;
ii) introduction d'eau et du déchet acide sous forme sèche, humide, semi-liquide ou liquide dans un deuxième conteneur et malaxage de l'eau et du déchet jusqu'à obtention d'un mélange homogène ;
iii) transvasement du mélange obtenu à la sous-étape ii) du deuxième conteneur dans le premier conteneur et simultanément ou successivement
iv) malaxage du ciment phosphomagnésien et du mélange obtenu à la sous-étape ii) jusqu'à homogénéisation, moyennant quoi on obtient la pâte cimentaire.

Si des adjuvants et/ou du sable et/ou des gravillons sont prévus, alors ils peuvent être introduits dans le premier conteneur en même temps que le ciment phosphomagnésien et être malaxés avec ce ciment à la sous-étape i).

Quelle que soit la façon dont est réalisée l'étape a), les opérations de malaxage peuvent être réalisées au moyen d'un dispositif d'agitation mécanique tel qu'un dispositif d'agitation à une ou plusieurs pales rotatives.

Par ailleurs, quelle que soit la façon dont est réalisée l'étape a), le conteneur dans lequel est effectuée cette étape peut être ou non un conteneur servant aussi de fût de conditionnement.

Aussi, le procédé peut-il comprendre de plus, entre les étapes a) et b), une étape de vidange du conteneur dans lequel est réalisée dans un fût de conditionnement :
- soit l'étape a) si cette étape est entièrement réalisée dans un seul conteneur,
- soit la dernière sous-étape de l'étape a) si cette étape est réalisée en utilisant deux conteneurs différents comme, par exemple, dans le cinquième mode de mise en oeuvre du procédé décrit ci-avant.

Le durcissement de la pâte cimentaire, ou étape b), peut être réalisé par entreposage du fût de conditionnement à température ambiante et dans des conditions d'hygrométrie contrôlées.

Ce fût de conditionnement est scellé hermétiquement, soit entre l'étape a) et l'étape b) soit postérieurement à l'étape b).

Comme précédemment indiqué, le déchet acide est choisi parmi les liquides de pH au plus égal à 4, les semi-liquides de pH au plus égal à 4, les solides dont la dissolution partielle ou totale (si ces solides renferment des matières insolubles) dans de l'eau conduit à une solution ou une suspension de pH au plus égal à 4, ou un mélange de ceux-ci.

S'il est liquide, le déchet acide peut notamment comprendre ou être constitué par :
- une solution aqueuse d'acide sulfurique telle qu'un effluent aqueux issu de la lixiviation d'un minerai uranifère par l'acide sulfurique, ou
- une solution aqueuse d'acide phosphorique telle qu'un effluent aqueux issu de la lixiviation d'un phosphate naturel par de l'acide sulfurique, ou
- une solution aqueuse d'acide nitrique telle qu'un effluent aqueux issu du raffinage de concentrés d'uranium naturel ou du traitement de combustibles nucléaires usés, ou
- une solution aqueuse d'acide sulfurique, phosphorique, nitrique, chlorhydrique et/ou fluorhydrique telle qu'un effluent aqueux issu de la décontamination d'installations nucléaires, ou
- un mélange de celles-ci.

S'il est semi-liquide, le déchet acide peut notamment comprendre ou être constitué par une boue telle que :
- une boue de diuranate d'uranium issue d'opérations de conversion de l'uranium, ou
- une boue de résines échangeuses d'ions, ou
- un mélange de celles-ci.

S'il est solide, le déchet acide peut notamment comprendre ou être constitué par :
- des gravats issu d'opérations de démantèlement d'installations nucléaires, ou
- des dépôts de corrosion hydrosolubles, ou
- des résidus solides issus du séchage de gels de décontamination, ou
- un mélange de ceux-ci.

Dans tous les cas, le déchet acide représente, de préférence, de 5 % à 70 % massiques de la masse de la pâte cimentaire.

Si le déchet acide est un déchet solide, alors le procédé peut comprendre de plus un traitement préalable de réduction des dimensions de ce déchet, par exemple un traitement mécanique du type concassage, fragmentation ou analogue.

Le procédé de l'invention présente de nombreux avantages dont notamment celui de simplifier et raccourcir le conditionnement par cimentation de déchets acides et de permettre, par là-même, des économies de temps, d'énergie et de réactifs, et ce, sans que cela affecte la qualité des colis de conditionnement obtenus.

D'autres caractéristiques et avantages du procédé de l'invention ressortiront du complément de description qui suit, qui se rapporte à des exemples de mise en oeuvre de ce procédé pour cimenter des solutions aqueuses acides ainsi qu'une boue acide.

Il va de soi que ce complément de description n'est donné qu'à titre d'illustration de l'objet de l'invention et ne doit en aucun cas être interprété comme une limitation de cet objet.

### BRÈVE DESCRIPTION DES FIGURES

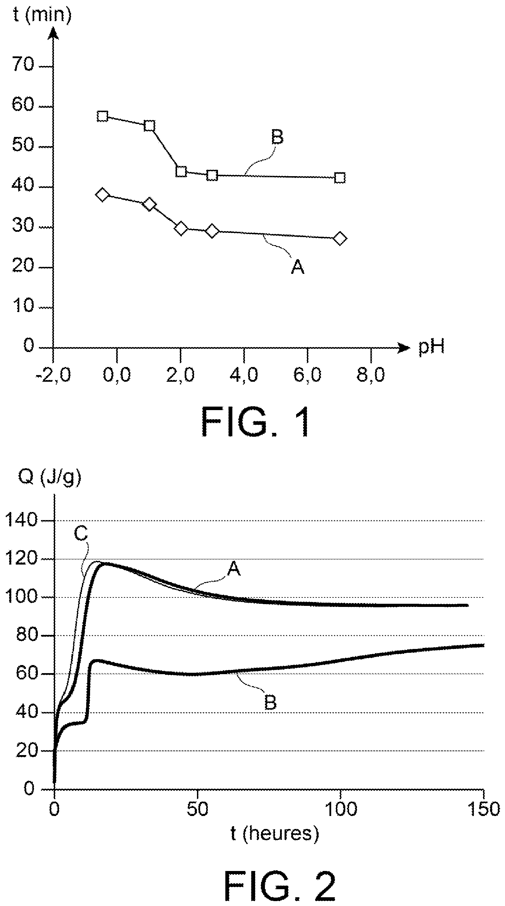

La figure 1 illustre l'évolution du temps de prise, noté t et exprimé en minutes, de mortiers à base d'un ciment phosphomagnésien ayant été gâchés avec une solution aqueuse soit d'acide nitrique soit uniquement constituée d'eau, en fonction du pH de cette solution aqueuse ; sur cette figure, la courbe A correspond au début de la prise des mortiers tandis que la courbe B correspond à la fin de la prise des mortiers.
La figure 2 illustre l'évolution de la chaleur de réaction, notée Q et exprimée en J/g, de mortiers à base d'un ciment phosphomagnésien ayant été gâchés avec une solution aqueuse soit d'acide nitrique soit uniquement constituée d'eau, en fonction du temps, noté t et exprimé en heures ; sur cette figure, la courbe A correspond à un mortier gâché avec une solution aqueuse comprenant 0,1 mol/L d'acide nitrique (pH 1) ; la courbe B correspond à un mortier gâché avec une solution aqueuse comprenant 3 mol/L d'acide nitrique (pH ≈ -0,5) tandis que la courbe C correspond à un mortier gâché avec de l'eau.

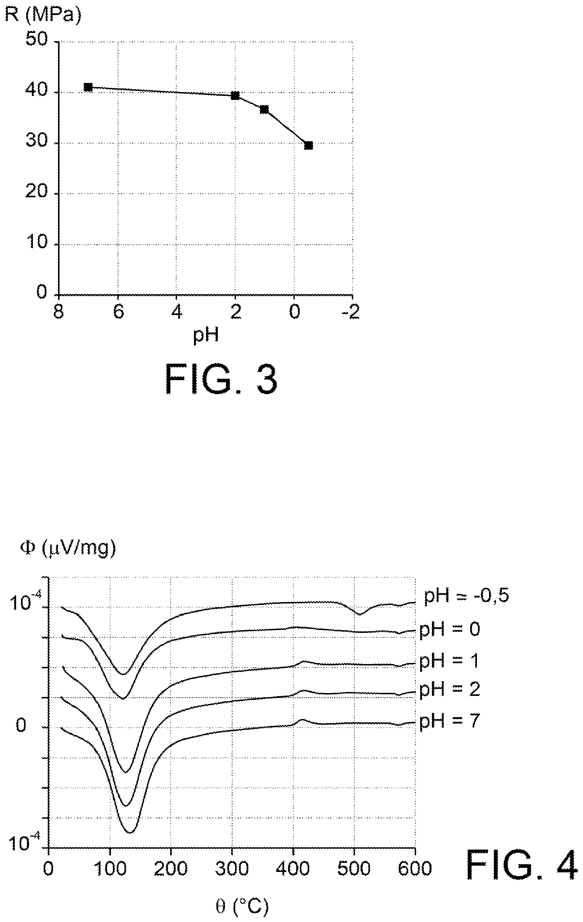

La figure 3 illustre l'évolution de la résistance en compression, notée R et exprimée en MPa, de mortiers à base d'un ciment phosphomagnésien ayant été gâchés avec une solution aqueuse soit d'acide nitrique soit uniquement constituée d'eau, en fonction du pH de cette solution aqueuse.
La figure 4 illustre les courbes d'analyse thermique différentielle (ou courbes ATD) de mortiers à base d'un ciment phosphomagnésien ayant été gâchés avec une solution aqueuse soit d'acide nitrique soit uniquement constituée d'eau, en fonction du pH de cette solution aqueuse ; sur cette figure, le flux de chaleur, noté Φ et exprimé en µV/mg, est indiqué sur l'axe des ordonnées, tandis que la température, notée θ et exprimée en °C, est indiquée sur l'axe des abscisses.

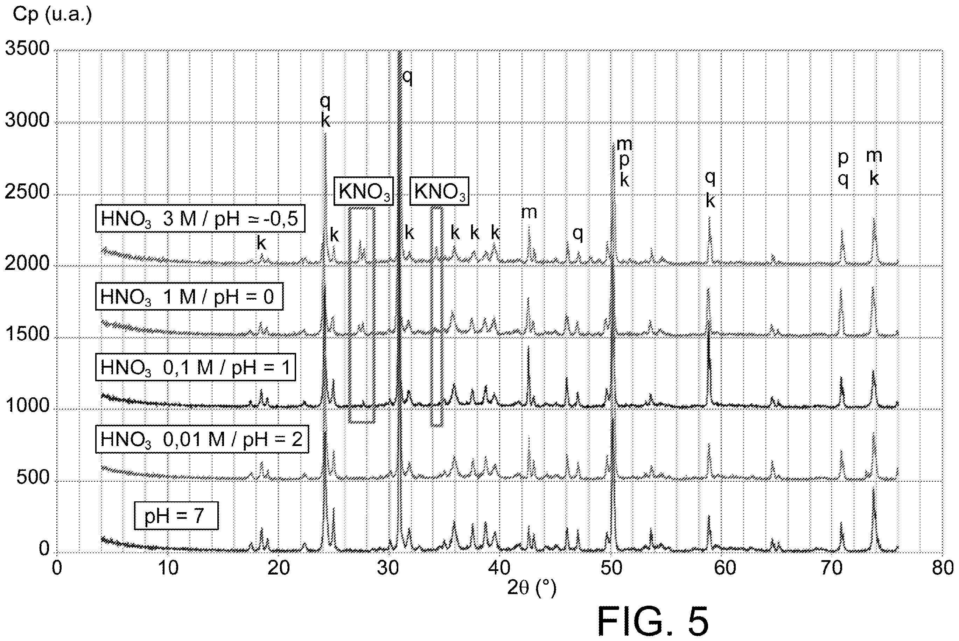

La figure 5 illustre les diagrammes de diffraction des rayons X de mortiers à base d'un ciment phosphomagnésien, ayant été gâchés avec une solution aqueuse soit d'acide nitrique soit uniquement constituée d'eau ; sur ces diagrammes, la lettre q indique la présence de quartz, la lettre k indique la présence de k-struvite, tandis que la lettre m indique la présence d'oxyde de magnésium.

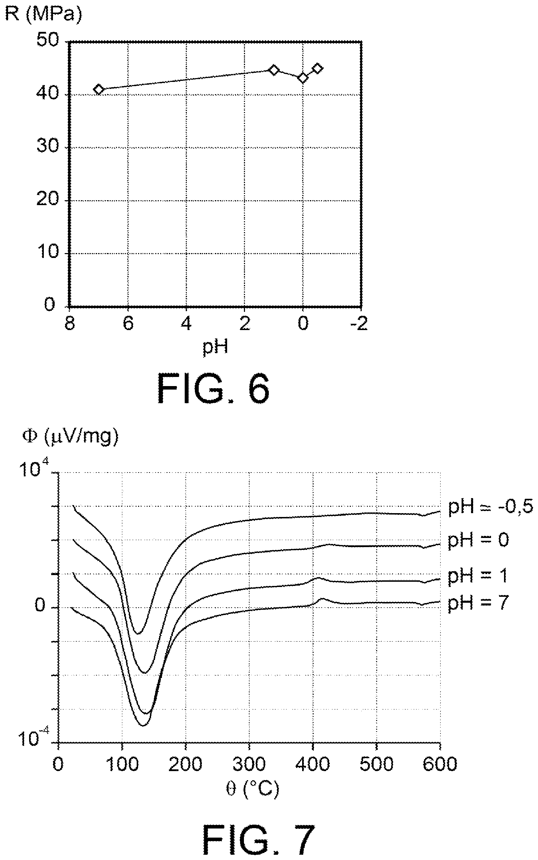

La figure 6 illustre l'évolution de la résistance en compression, notée R et exprimée en MPa, de mortiers à base d'un ciment phosphomagnésien ayant été gâchés avec une solution aqueuse soit d'acide sulfurique soit uniquement constituée d'eau, en fonction du pH de cette solution aqueuse.
La figure 7 illustre les courbes ATD de mortiers à base d'un ciment phosphomagnésien ayant été gâchés avec une solution aqueuse soit d'acide sulfurique soit uniquement constituée d'eau, en fonction du pH de cette solution aqueuse ; sur cette figure, le flux de chaleur, noté Φ et exprimé en µV/mg, est indiqué sur l'axe des ordonnées, tandis que la température, notée θ et exprimée en °C, est indiquée sur l'axe des abscisses.

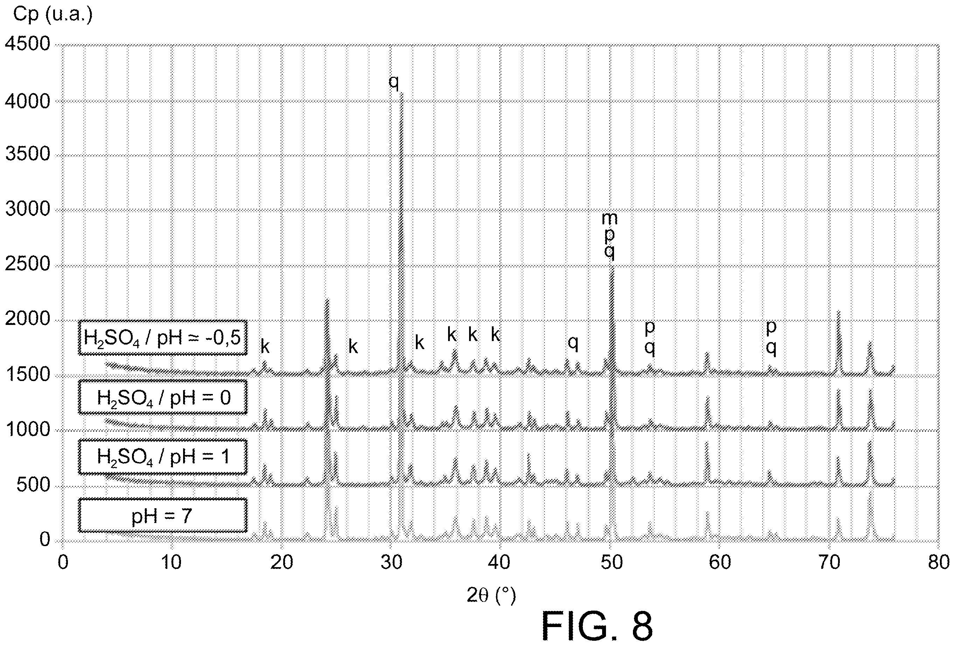

La figure 8 illustre les diagrammes de diffraction des rayons X de mortiers à base d'un ciment phosphomagnésien, ayant été gâchés avec une solution aqueuse soit d'acide sulfurique soit uniquement constituée d'eau ; sur ces diagrammes, la lettre q indique la présence de quartz, la lettre k indique la présence de k-struvite, tandis que la lettre m indique la présence d'oxyde de magnésium.

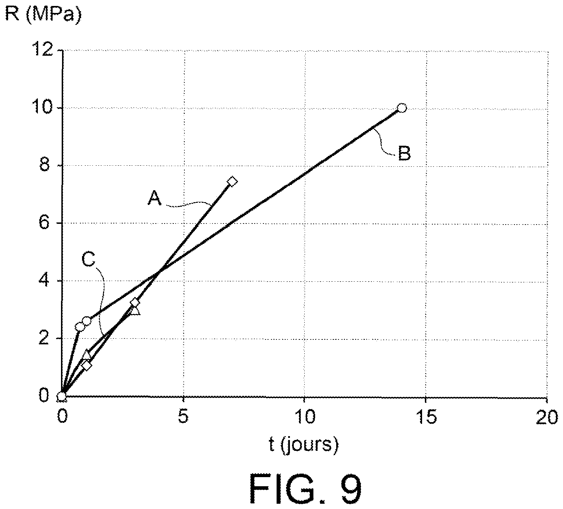

La figure 9 illustre l'évolution de la résistance en compression, notée R et exprimée en MPa, en fonction du temps, noté t et exprimé en jours, d'un premier mortier à base d'un ciment phosphomagnésien comprenant une boue acide et, à titre de comparaison, d'un deuxième mortier ne se différenciant du premier qu'en ce qu'il est exempt de boue acide ; sur cette figure, les courbes A et B correspondent à deux échantillons différents du premier mortier tandis que la courbe C correspond à un échantillon du deuxième mortier.

### EXPOSÉ DÉTAILLÉ DE MODES DE MISE EN ŒUVRE PARTICULIERS

### EXEMPLE 1 : Cimentation d'acide nitrique

On prépare une première série de mortiers ayant la composition et les caractéristiques présentées dans le tableau I ci-après.

**Tableau I**

| **Composants** | | **Mg/P** | **eau/ciment** | **sable/ciment** |
|---|---|---|---|---|
| (% massiques) | | (mol/mol) | (m/m) | (m/m) |
| MgO (DBM 90) | 26 | 5 | 0,30 | 1 |
| KH₂PO₄ | 17 | | | |
| Borax | 1 | | | |
| Sable CV32 (Sibelco) | 43 | | | |
| Eau | 13 | | | |

Pour ce faire, les constituants solides de ces mortiers (i.e. MgO, KH₂PO₄, borax et sable) sont tout d'abord malaxés ensemble dans un malaxeur, pendant 2 minutes, pour obtenir un mélange homogène, puis le mélange ainsi obtenu est malaxé avec une solution aqueuse de gâchage pendant 30 secondes à vitesse lente, puis 30 secondes à vitesse rapide et, enfin, 1 minute à vitesse lente.

Six solutions aqueuses de gâchage différentes sont utilisées, à savoir :
- cinq solutions comprenant de l'acide nitrique, respectivement à hauteur de 0,003 mol/L (pH ≈ 2,5), 0,01 mol/L (pH 2), 0,1 mol/L (pH 1), 1 mol/L (pH 0) et 3 mol/L (pH ≈ -0,5), et
- une solution qui est uniquement constituée d'eau (pH 7) pour disposer d'un mortier témoin.

Les mortiers sont soumis à :
- des mesures de temps de prise, que l'on réalise au moyen d'un prisomètre Vicat selon la norme NF EN 196-3+A1 (Méthodes d'essais des ciments. Partie 3 : détermination du temps de prise et de la stabilité) ; et
- des mesures de chaleur de réaction (ou chaleur d'hydratation) sur une période de 150 heures, que l'on réalise au moyen d'un calorimètre de Langavant selon la norme NF EN 196-9 (Méthodes d'essais des ciments. Partie 9 : chaleur d'hydratation, méthode semi-adiabatique).

Après durcissement, ils sont également soumis à :
- des mesures de résistance à la compression, que l'on réalise au moyen d'une presse à mortier, sur des demi-éprouvettes de 4 cm × 4 cm × 16 cm, selon la norme NF EN 196-1 (Méthodes d'essais des ciments. Partie 1 : détermination des résistances mécaniques) ; et
- des analyses thermiques différentielles (ATD).

Les résultats de ces mesures et ATD sont illustrés sur les figures 1 à 4.

Les figures 1 à 3 montrent que la présence d'acide nitrique dans les solutions aqueuses de gâchage :
1°) est sans influence négative notable sur le temps de prise des mortiers pour les solutions ayant un pH égal ou supérieur à 2 (soit une concentration en acide nitrique égale ou inférieure à 0,01 mol/L) ; par contre, une augmentation du temps de prise est observée pour les solutions ayant un pH égal ou inférieur à 1 (cf. figure 1) ;
2°) se traduit par une diminution de la chaleur de réaction des mortiers avec l'augmentation de la concentration en acide de la solution aqueuse (cf. figure 2) ; et
3°) induit une diminution de la résistance en compression des mortiers mais que, quelle que soit la concentration en acide nitrique, la résistance en compression obtenue est supérieure à 8 MPa qui représente la valeur de résistance en compression minimale recherchée (cf. figure 3) ;

La figure 4 montre, quant à elle, qu'un premier pic endothermique, situé entre 120 °C et 135 °C et correspondant à une déshydratation de la k-struvite (laquelle représente la phase liante des ciments phosphomagnésiens issue de la réaction entre MgO et KH₂PO₄), est commun à tous les mortiers même si l'on constate que la perte de masse associée à ce pic est de plus en plus faible au fur et à mesure que la concentration en acide nitrique de la solution aqueuse de gâchage augmente.

Après durcissement, les mortiers sont de plus caractérisés par diffraction des rayons X (DRX).

Comme le montre la figure 5, le mortier témoin est composé des phases cristallines suivantes :
- une phase correspondant à du quartz (indice q), qui représente la phase principale du mortier et qui provient du sable,
- une phase correspondant à la k-struvite (indice k) précédemment évoquée, et
- le reste du MgO (indice m) puisque seuls 15 % massiques environ du MgO introduit dans le mortier sont consommés lors de la formation de la k-struvite.

La figure 5 montre également qu'à partir d'une concentration en acide nitrique de 0,1 mol/L (pH 1), des pics caractéristiques du nitrate de potassium (KNO₃), apparaissent aux valeurs d'angle 2θ suivantes : 27,2° ; 27,6° ; et 34,1°.

Aucune trace de KH₂PO₄ n'est observée sur le diagramme DRX du mortier témoin, suggérant que ce composé est entièrement consommé lors de la lors de la formation de la k-struvite.

L'introduction d'acide nitrique dans un mortier lors de la préparation de celui-ci induit donc la formation de nitrate de potassium.

Le présent exemple montre que la cimentation de déchets fortement à très fortement acides produits par des procédés industriels utilisant de l'acide nitrique, tels que les effluents aqueux issus du raffinage de concentrés d'uranium naturel ou du traitement de combustibles nucléaires usés, peut être effectuée directement, c'est-à-dire en l'absence de tout traitement préalable de ces déchets visant à réduire leur acidité, et ce, sans raccourcissement du temps de prise et sans augmentation de la chaleur de réaction.

Une légère diminution des propriétés mécaniques est observée avec l'augmentation de la concentration en acide nitrique. Ceci est dû au fait que, le dihydrogénophosphate de potassium réagissant avec l'acide nitrique, il est partiellement consommé par cette réaction et, donc, moins disponible pour réagir avec l'oxyde de magnésium et former avec ce dernier de la k-struvite. Une augmentation de la quantité de sel d'acide phosphorique, en l'espèce KH₂PO₄, incorporé dans la pâte cimentaire, le mortier ou le béton devrait être une mesure suffisante pour pallier ce phénomène.

### EXEMPLE 2 : Cimentation d'acide sulfurique

On prépare une deuxième série de mortiers ayant la composition et les caractéristiques présentées dans le tableau I ci-avant, en suivant le même protocole opératoire que celui indiqué dans l'exemple 1 mais en utilisant pour le gâchage :
- trois solutions aqueuses comprenant de l'acide sulfurique, respectivement à hauteur de 0,1 mol/L (pH 1), 1 mol/L (pH 0) et 3 mol/L (pH ≈ -0,5), et
- une solution qui est uniquement constituée d'eau (pH 7) pour disposer, là également, d'un mortier témoin.

Les mortiers sont soumis à des mesures de temps de prise que l'on réalise de la même manière que dans l'exemple 1 et, après durcissement, à des mesures de résistance à la compression et à des ATD que l'on réalise également de la même manière que dans l'exemple 1.

Les résultats des mesures de temps de prise sont consignés dans le tableau Il ci-après tandis que les résultats des mesures de résistance à la compression et des ATD sont illustrés sur les figures 6 et 7.

**Tableau Il**

| **pH** | **Temps de prise** (min) | |
|---|---|---|
| | **Début** | **Fin** |
| 7 | 27,4 | 42,4 |
| 1 | 17 | 30 |
| 0 | 42 | 72 |
| ≈ -0,5 | 27 | 47 |

Ce tableau et les figures 6 et 7 montrent que la présence d'acide sulfurique dans les mortiers n'a pas d'influence notable sur le temps de prise des mortiers, ni sur leur résistance à la compression ni sur la quantité de k-struvite qui se forme lors du durcissement des mortiers.

Après durcissement, les mortiers sont de plus caractérisés par DRX.

Comme le montre la figure 8, la présence d'acide sulfurique dans un mortier ne semble pas avoir d'effet visible sur les phases cristallines du mortier, et ce, même pour une concentration en acide sulfurique de 3 mol/L. Aucune apparition de phases n'est constatée.

### EXEMPLE 3 : Cimentation d'une boue contenant de l'acide fluorhydrique

On cimente une boue contenant de l'acide fluorhydrique en procédant de la manière suivante.

Tout d'abord, des produits de corrosion se présentant sous la forme de paillettes pulvérulentes et comprenant en moyenne : 17,6 % massiques de fluor, 4,4 % massiques de nickel, 9,8 % massiques de fer, 15,6 % massiques de fluorure d'uranyle (UO₂F₂) et 33,3 % massiques de tétrafluorure d'uranium (UF₄), sont mélangés à de l'eau dans un rapport massique de 1 pour éviter toute dispersion des paillettes dans l'air environnant.

On obtient ainsi une boue acide de pH égal à 2 car l'UF₄ présent dans les paillettes réagit avec l'eau pour libérer de l'acide fluorhydrique selon l'équation :

UF₄ + 2H₂O → UO₂ + 4HF.

Puis, on prépare un premier mortier ayant la composition et les caractéristiques présentées dans le tableau III ci-après.

**Tableau III**

| **Composants** | | **Mg/P** | **eau/ciment** | **sable/ciment** |
|---|---|---|---|---|
| (% massiques) | | (mol/mol) | (m/m) | (m/m) |
| Boue (paillettes + eau) | 35 | 5,1 | 0,52 | 0,5 |
| MgO (DBM 90) | 24 | | | |
| KH₂PO₄ | 16 | | | |
| Borax | 1 | | | |
| Sable CV32 (Sibelco) | 20 | | | |
| Eau additionnelle | 4 | | | |

Pour ce faire, les constituants solides du mortier (i.e. MgO, KH₂PO₄, borax et sable) et l'eau additionnelle sont tout d'abord malaxés ensemble dans un malaxeur jusqu'à homogénéisation, puis la boue acide est introduite dans le malaxeur et le tout est malaxé jusqu'à homogénéisation.

À titre de témoin, est également préparé un deuxième mortier de même composition et de mêmes caractéristiques que le premier mortier à ceci près qu'il est exempt de produits de corrosion, c'est-à-dire de paillettes.

Aucune différence notable n'est observée en termes de temps de prise et de chaleur de réaction entre le premier et le deuxième mortier.

Après durcissement des mortiers, ceux-ci sont découpés en échantillons de forme cubique de 4 cm de côté et ces échantillons sont soumis à des essais de résistance en compression au moyen d'une presse manuelle.

Les résultats de ces essais sont illustrés sur la figure 9 dans laquelle les courbes A et B correspondent à deux échantillons différents du premier mortier tandis que la courbe C correspond à un échantillon du deuxième mortier.

Les premier et deuxième mortiers ont un rapport massique eau/ciment élevé puisqu'il est de 0,52, ce qui a pour effet d'abaisser la résistance en compression, effet qui est notoirement connu pour tout matériau cimentaire et, en particulier, pour les matériaux à base de ciments phosphomagnésiens.

Par contre, la figure 9 montre que la présence d'une boue de forte acidité dans le premier mortier n'a pas d'impact notable sur les valeurs de résistance en compression obtenues pour ce mortier.

### RÉFÉRENCES CITÉES

**[1]** C. Utton et I. H. Godfrey, Rapport du National Nuclear Laboratory NNL (09) 10212, 29 janvier 2010
**[2]** Demande internationale PCT WO 2004/075207

## Revendications

1. Procédé de conditionnement par cimentation d'un déchet acide, le déchet acide étant choisi parmi les liquides de pH au plus égal à 4, les semi-liquides de pH au plus égal à 4, les solides dont la dissolution partielle ou totale dans de l'eau conduit à une solution ou une suspension de pH au plus égal à 4, et les mélanges de ceux-ci, qui comprend les étapes de :
a) préparation d'une pâte cimentaire ayant au moins comme composants : un ciment phosphomagnésien et le déchet acide, et
b) durcissement de la pâte cimentaire ainsi obtenue,
et qui est **caractérisé en ce qu'**à l'étape a), la pâte cimentaire est préparée sans que le déchet acide ait été préalablement soumis à un traitement consistant à abaisser son acidité.

2. Procédé selon la revendication 1, dans lequel le ciment phosphomagnésien comprend de l'oxyde de magnésium et un sel d'acide phosphorique, dans un rapport molaire Mg/P qui est compris entre 1 et 12, de préférence entre 5 et 10.

3. Procédé selon la revendication 2, dans lequel le sel d'acide phosphorique est le dihydrogénophosphate de potassium.

4. Procédé selon l'une quelconque des revendications 1 à 3, dans lequel la pâte cimentaire comprend de plus au moins un adjuvant choisi parmi les superplastifiants et les retardateurs de prise.

5. Procédé selon la revendication 4, dans lequel la pâte cimentaire comprend au moins un retardateur de prise choisi parmi l'acide fluorhydrique, le fluorure de sodium, l'acide borique et le borate de sodium.

6. Procédé selon l'une quelconque des revendications 1 à 5, dans lequel la pâte cimentaire comprend de plus du sable et/ou des gravillons.

7. Procédé selon l'une quelconque des revendications 1 à 6, dans lequel la pâte cimentaire comprend un rapport massique eau/ciment phosphomagnésien allant de 0,10 à 1, de préférence de 0,20 à 0,60.

8. Procédé selon l'une quelconque des revendications 1 à 7, dans lequel l'étape a) comprend :
i) introduction du ciment phosphomagnésien et d'eau dans un conteneur et malaxage du ciment et de l'eau jusqu'à obtention d'un mélange homogène ;
ii) introduction du déchet acide sous forme sèche, humidifiée, semi-liquide ou liquide dans le conteneur; et simultanément ou successivement
iii) malaxage du mélange obtenu à la sous-étape i) et du déchet acide jusqu'à homogénéisation, moyennant quoi on obtient la pâte cimentaire.

9. Procédé selon l'une quelconque des revendications 1 à 7, dans lequel l'étape a) comprend :
i) introduction du déchet acide sous forme sèche dans un conteneur et malaxage du déchet jusqu'à homogénéisation ;
ii) introduction d'eau et du ciment phosphomagnésien dans le conteneur; et simultanément ou successivement
iii) malaxage du déchet acide, de l'eau et du ciment phosphomagnésien jusqu'à homogénéisation, moyennant quoi on obtient la pâte cimentaire.

10. Procédé selon l'une quelconque des revendications 1 à 7, dans lequel l'étape a) comprend :
i) introduction du déchet acide sous forme humidifiée, semi-liquide ou liquide dans un conteneur et son malaxage jusqu'à homogénéisation ;
ii) introduction du ciment phosphomagnésien dans le conteneur et malaxage du ciment et du déchet acide jusqu'à obtention d'un mélange homogène ;
iii) introduction éventuelle d'eau dans le conteneur et, simultanément ou successivement, malaxage du mélange obtenu à la sous-étape ii) et de l'eau jusqu'à homogénéisation, moyennant quoi on obtient la pâte cimentaire.

11. Procédé selon l'une quelconque des revendications 1 à 7, dans lequel l'étape a) comprend :
i) introduction du déchet acide sous forme humidifiée, semi-liquide ou liquide dans un conteneur et malaxage du déchet jusqu'à homogénéisation ;
ii) introduction du sable et/ou des gravillons dans le conteneur et malaxage du déchet avec le sable et/ou les gravillons jusqu'à obtention d'un mélange homogène ;
iii) introduction d'eau et du ciment phosphomagnésien dans le conteneur; et simultanément ou successivement
iv) malaxage du mélange obtenu à la sous-étape ii), de l'eau et du ciment phosphomagnésien jusqu'à homogénéisation, moyennant quoi on obtient la pâte cimentaire.

12. Procédé selon l'une quelconque des revendications 1 à 7, dans lequel l'étape a) comprend :
i) introduction du ciment phosphomagnésien dans un premier conteneur et malaxage du ciment jusqu'à homogénéisation ;
ii) introduction d'eau et du déchet acide sous forme sèche, humide, semi-liquide ou liquide dans un deuxième conteneur et malaxage de l'eau et du déchet jusqu'à obtention d'un mélange homogène ;
iii) transvasement du mélange obtenu à la sous-étape ii) du deuxième conteneur dans le premier conteneur; et simultanément ou successivement
iv) malaxage du ciment phosphomagnésien et du mélange obtenu à la sous-étape ii) jusqu'à homogénéisation, moyennant quoi on obtient la pâte cimentaire.

13. Procédé selon l'une quelconque des revendications 1 à 12, dans lequel le déchet acide représente de 5 % à 70 % massiques de la masse de la pâte cimentaire.

14. Procédé selon l'une quelconque des revendications 1 à 13, dans lequel le déchet acide est un déchet produit par l'industrie nucléaire.

15. Procédé selon la revendication 14, dans lequel le déchet acide est choisi parmi :
- les déchets issus de procédés mis en oeuvre dans le cycle du combustible nucléaire et, notamment, pour l'extraction minière de l'uranium, la conversion et l'enrichissement de l'uranium, la fabrication des combustibles nucléaires neufs et le traitement des combustibles nucléaires usés ;
- les déchets issus d'opérations de décontamination d'équipements et installations du cycle nucléaire ou de réacteurs nucléaires ;
- les déchets issus d'opérations d'assainissement-démantèlement d'installations nucléaires ; et
- les mélanges de ceux-ci.

## Patentansprüche

1. Verfahren zum Konditionieren eines sauren Abfalls durch Zementieren, wobei der saure Abfall aus den Flüssigkeiten mit einem pH von höchstens gleich 4, den Halb-Flüssigkeiten mit einem pH von höchstens gleich 4, den Feststoffen, deren teilweise oder vollständige Auflösung in Wasser zu einer Lösung oder einer Suspension mit einem pH von höchstens gleich 4 führt und den Gemischen derselben ausgewählt ist, das die folgenden Schritte umfasst:
a) Herstellen eines Zementbreis, der als Bestandteile mindestens hat: Einen Phosphor-Magnesium-Zement und den sauren Abfall, und
b) Härten des derart erhaltenen Zementbreis,
und das **dadurch gekennzeichnet ist, dass** in Schritt a) der Zementbreis hergestellt wird, ohne dass der saure Abfall zuvor einer Behandlung unterzogen wurde, die darin besteht, seinen Säuregrad zu senken.

2. Verfahren nach Anspruch 1, wobei der Phosphor-Magnesium-Zement Magnesiumoxid und ein Phosphorsäuresalz in einem molaren Verhältnis Mg/P umfasst, das zwischen 1 und 12, vorzugsweise zwischen 5 und 10 liegt.

3. Verfahren nach Anspruch 2, wobei das Phosphorsäuresalz Kaliumdihydrogenphosphat ist.

4. Verfahren nach einem der Ansprüche 1 bis 3, wobei der Zementbrei zusätzlich mindestens einen Hilfsstoff umfasst, der aus den Superweichmachern und den Abbindeverzögerern ausgewählt ist.

5. Verfahren nach Anspruch 4, wobei der Zementbrei mindestens einen Abbindeverzögerer umfasst, der aus Fluorwasserstoffsäure, Natriumfluorid, Borsäure und Natriumborat ausgewählt ist.

6. Verfahren nach einem der Ansprüche 1 bis 5, wobei der Zementbrei zusätzlich Sand und/oder Kies umfasst.

7. Verfahren nach einem der Ansprüche 1 bis 6, wobei der Zementbrei ein Massenverhältnis Wasser/Phosphor-Magnesium-Zement umfasst, das von 0,10 bis 1, vorzugsweise von 0,20 bis 0,60 reicht.

8. Verfahren nach einem der Ansprüche 1 bis 7, wobei der Schritt a) umfasst:
i) Einleiten des Phosphor-Magnesium-Zements und von Wasser in einen Behälter und Mischen des Zements und des Wassers bis zum Erhalt eines homogenen Gemischs;
ii) Einleiten des sauren Abfalls in trockener, angefeuchteter, halbflüssiger oder flüssiger Form in den Behälter; und gleichzeitig oder aufeinanderfolgend
iii) Mischen des in Unterschritt i) erhaltenen Gemischs und des sauren Abfalls bis zur Homogenisierung, wodurch man den Zementbrei erhält.

9. Verfahren nach einem der Ansprüche 1 bis 7, wobei der Schritt a) umfasst:
i) Einleiten des sauren Abfalls in trockener Form in einen Behälter und Mischen des Abfalls bis zur Homogenisierung;
ii) Einleiten von Wasser und des Phosphor-Magnesium-Zements in den Behälter; und gleichzeitig oder aufeinanderfolgend
iii) Mischen des sauren Abfalls, des Wassers und des Phosphor-Magnesium-Zements bis zur Homogenisierung, wodurch man den Zementbrei erhält.

10. Verfahren nach einem der Ansprüche 1 bis 7, wobei der Schritt a) umfasst:
i) Einleiten des sauren Abfalls in angefeuchteter, halbflüssiger oder flüssiger Form in einen Behälter und Mischen bis zur Homogenisierung;
ii) Einleiten des Phosphor-Magnesium-Zements in den Behälter und Mischen des Zements und des sauren Abfalls bis zum Erhalt eines homogenen Gemischs;
iii) eventuelles Einleiten von Wasser in den Behälter und gleichzeitig oder aufeinanderfolgend Mischen des in Unterschritt ii) erhaltenen Gemischs und von Wasser bis zur Homogenisierung, wodurch man den Zementbrei erhält.

11. Verfahren nach einem der Ansprüche 1 bis 7, wobei der Schritt a) umfasst:
i) Einleiten des sauren Abfalls in angefeuchteter, halbflüssiger oder flüssiger Form in einen Behälter und Mischen des Abfalls bis zur Homogenisierung;
ii) Einleiten des Sands und/oder des Kieses in den Behälter und Mischen des Abfalls mit dem Sand und/oder dem Kies bis zum Erhalt eines homogenen Gemischs;
iii) Einleiten von Wasser und des Phosphor-Magnesium-Zements in den Behälter; und gleichzeitig oder aufeinanderfolgend
iv) Mischen des in Unterschritt ii) erhaltenen Gemischs, des Wassers und des Phosphor-Magnesium-Zements bis zur Homogenisierung, wodurch man den Zementbrei erhält.

12. Verfahren nach einem der Ansprüche 1 bis 7, wobei der Schritt a) umfasst:
i) Einleiten des Phosphor-Magnesium-Zements in einen ersten Behälter und Mischen des Zements bis zur Homogenisierung;
ii) Einleiten von Wasser und des sauren Abfalls in trockener, angefeuchteter, halbflüssiger oder flüssiger Form in einen zweiten Behälter und Mischen des Wassers und des Abfalls bis zum Erhalt eines homogenen Gemischs;
iii) Umfüllen des in Unterschritt ii) erhaltenen Gemischs aus dem zweiten Behälter in den ersten Behälter; und gleichzeitig oder aufeinanderfolgend
iv) Mischen des Phosphor-Magnesium-Zements und des in Unterschritt ii) erhaltenen Gemischs bis zur Homogenisierung, wodurch man den Zementbrei erhält.

13. Verfahren nach einem der Ansprüche 1 bis 12, wobei der saure Abfall 5 Massen-% bis 70 Massen-% der Masse des Zementbreis darstellt.

14. Verfahren nach einem der Ansprüche 1 bis 13, wobei der saure Abfall ein von der Kernindustrie produzierter Abfall ist.

15. Verfahren nach Anspruch 14, wobei der saure Abfall ausgewählt ist aus:
- den Abfällen, die aus Verfahren hervorgegangen sind, die im Zyklus des Kernbrennstoffs durchgeführt werden und insbesondere für die Förderung des Urans im Bergbau, die Umwandlung und die Anreicherung des Urans, die Herstellung der neuen Kernbrennstoffe und die Behandlung der verbrauchten Kernbrennstoffe;
- den Abfällen, die aus Maßnahmen zur Dekontaminierung von Ausrüstungen und Anlagen des Nuklearzyklus oder von Kernreaktoren hervorgegangen sind;
- den Abfällen, die aus Maßnahmen zur Sanierung und zum Rückbau von Kernanlagen hervorgegangen sind; und
- den Gemischen derselben.

## Claims

1. Method for conditioning an acid waste by cementation, the acid waste being selected from among liquids having a pH of no more than 4, semi-liquids having a pH of no more than 4, solids of which the partial or full dissolution in water leads to a solution or suspension having a pH of no more than 4, and mixtures thereof, which comprises the steps of:
a) preparing a cement paste having as components at least: a magnesium phosphate cement and the acid waste, and
b) hardening the cement paste thus obtained,
and which is **characterized in that** at step a), the cement paste is prepared without subjecting beforehand the acid waste to any treatment consisting in reducing the acidity thereof.

2. Method according to claim 1, wherein the magnesium phosphate cement comprises magnesium oxide and a phosphoric acid salt in a Mg/P molar ratio of between 1 and 12, preferably between 5 and 10.

3. Method according to claim 2, wherein the phosphoric acid salt is potassium dihydrogen phosphate.

4. Method according to any of claims 1 to 3, wherein the cement paste further comprises at least one admixture selected from among superplasticizers and setting retarders.

5. Method according to claim 4, wherein the cement paste comprises at least one setting retarder selected from among hydrofluoric acid, sodium fluoride, boric acid and sodium borate.

6. Method according to any of claims 1 to 5, wherein the cement paste further comprises sand and/or gravel.

7. Method according to any of claims 1 to 6, wherein the cement paste has a water/magnesium phosphate cement mass ratio ranging from 0.10 to 1, preferably from 0.20 to 0.60.

8. Method according to any of claims 1 to 7, wherein step a) comprises:
i) loading the magnesium phosphate cement and water into a container and mixing the cement and water until a homogeneous mixture is obtained;
ii) adding the acid waste in dry, wetted, semi-liquid or liquid form to the container; and simultaneously or successively
iii) mixing the mixture obtained at sub-step i) with the acid waste until homogenisation, whereby the cement paste is obtained.

9. Method according to any of claims 1 to 7, wherein step a) comprises:
i) loading the acid waste in dry form into a container and mixing the waste until homogenisation;
ii) adding water and the magnesium phosphate cement to the container; and simultaneously or successively
iii) mixing the acid waste with the water and the magnesium phosphate cement until homogenisation, whereby the cement paste is obtained.

10. Method according to any of claims 1 to 7, wherein step a) comprises:
i) loading the acid waste in wetted, semi-liquid or liquid form into a container and mixing the latter until homogenisation;
ii) adding the magnesium phosphate cement to the container and mixing the cement with the acid waste until a homogenous mixture is obtained;
iii) optionally adding water to the container and, simultaneously or successively, mixing the mixture obtained at sub-step ii) with the water until homogenisation, whereby the cement paste is obtained.

11. Method according to any of claims 1 to 7, wherein step a) comprises:
i) loading the acid waste in wetted, semi-liquid or liquid form into a container and mixing the waste until homogenisation;
ii) adding sand and/or gravel to the container and mixing the waste with the sand and/or gravel until a homogeneous mixture is obtained;
iii) adding water and the magnesium phosphate cement to the container; and simultaneously or successively
iv) mixing the mixture obtained at sub-step ii) with the water and the magnesium phosphate cement until homogenisation, whereby the cement paste is obtained.

12. Method according to any of claims 1 to 7, wherein step a) comprises:
i) loading the magnesium phosphate cement into a first container and mixing the cement until homogenisation;
ii) loading water and the acid waste in dry, wetted, semi-liquid or liquid form into a second container and mixing the water with the waste until a homogenous mixture is obtained;
iii) transferring the mixture obtained at sub-step ii) from the second container to the first container; and simultaneously or successively
iv) mixing the magnesium phosphate cement with the mixture obtained at sub-step ii) until homogenisation, whereby the cement paste is obtained.

13. Method according to any of claims 1 to 12, wherein the acid waste represents from 5% to 70% by mass of the mass of the cement paste.

14. Method according to any of claims 1 to 13, wherein the acid waste is a waste produced by the nuclear industry.

15. Method according to claim 14, wherein the acid waste is selected from among:
- waste issued from processes implemented in the nuclear fuel cycle, and in particular for the mining extraction of uranium, the conversion and enriching of uranium, the production of fresh nuclear fuels and the treatment of spent nuclear fuels;
- waste issued from decontamination operations of nuclear cycle equipment and plants, or of nuclear reactors;
- waste issued from remediation-dismantling operations of nuclear plants; and
- mixtures thereof.
